(19)

**Europäisches Patentamt**
**European Patent Office**
**Office européen des brevets**

(11) **EP 1 829 401 B1**

(12) **EUROPEAN PATENT SPECIFICATION**

(45) Date of publication and mention
of the grant of the patent:
**30.09.2009 Bulletin 2009/40**

(51) Int Cl.:
*H04W 24/00* (2009.01)

(86) International application number:
**PCT/GB2005/004704**

(21) Application number: **05818355.9**

(22) Date of filing: **07.12.2005**

(87) International publication number:
**WO 2006/061613 (15.06.2006 Gazette 2006/24)**

(54) **MAINTAINING A LEVEL OF PERFORMANCE IN A MOBILE TELECOMMUNICATIONS SYSTEM**

AUFRECHTERHALTUNG EINES LEISTUNGSFÄHIGKEITSNIVEAUS IN EINEM MOBILTELEKOMMUNIKATIONSSYSTEM

MAINTIENT D'UN NIVEAU DE PERFORMANCES DANS UN SYSTEME MOBILE DE TELECOMMUNICATIONS

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.12.2004 GB 0426901**

(43) Date of publication of application:
**05.09.2007 Bulletin 2007/36**

(73) Proprietor: **VODAFONE LIMITED**
**Newbury**
**Berkshire RG14 2FN (GB)**

(72) Inventors:
• **LAW, Alan**
**Basingstoke,**
**Hampshire RG22 4UJ (GB)**

• **MARSHALL, Peter**
**Maidenhead,**
**Berkshire SL6 4HY (GB)**
• **THOMAS, Chris**
**Reading,**
**Berkshire RG7 3ES (GB)**

(74) Representative: **Keston, David Arthur et al**
**Vodafone Group Services Ltd.**
**Group Legal (Patents)**
**Vodafone House**
**The Connection**
**Newbury**
**Berkshire RG14 2FN (GB)**

(56) References cited:
**US-A- 5 812 636**      **US-A1- 2004 038 678**
**US-A1- 2004 071 117**

**Description**

Technical Field

The invention relates to methods and apparatus for monitoring the performance of devices in a telecommunications system. Embodiments of the invention, to be described in more detail below by way of example only, involve the identification of problematic devices within a mobile telecommunications system and the instigation of appropriate remedial action against the problematic devices in order to maintain the required level of performance in the system.

Background Art

Current approaches to assessing the performance of a plurality of mobile devices (User Entities, UEs) include the testing of a small number of such UEs prior to their release for use on a telecommunications system. The results of such testing are assumed to apply for subsequent production runs of similar UEs, which may number several million individual UEs. It is therefore possible that isolated problems with specific UEs may not be identified and that problematic UEs may subsequently be released onto the network. Further, this approach is unable to identify the problems that "legacy" devices may encounter when attempting to use new services when such services are subsequently made available on the telecommunications system.

US 5,812,636 describes a technique for isolating faulty mobile units, involving monitoring the cell traffic pattern to detect abnormalities.

US 2004/0038678 is another document which describes an approach for locating faulty terminals in a cellular radio communication system.

Disclosure of the Invention

According to a first aspect of the invention, there is provided a method of monitoring the performance of mobile devices in a mobile telecommunications system, the method including analysing data in an uplink from the mobile devices to the telecommunications system; comparing this data to an expected value so as to tend to identify any of said mobile devices as not performing as expected and therefore as being a problematic device, the identifying of a problematic device comprising the steps of analysing data in the uplink from a subset of the said mobile devices; identifying all mobile devices within the subset as potentially problematic if said data differs from the expected values; and further analysing data in the uplink from other subsets of said mobile devices as the potentially problematic devices join those different subsets.

According to a second aspect of the invention, there is provided apparatus for monitoring the performance of mobile devices in a mobile telecommunications system, the apparatus including means for analysing data in an uplink from the mobile devices to the mobile telecommunications system and comparing this data to expected values so as to tend to identify any of said devices as not performing as expected and therefore as being a problematic device, such that the apparatus further includes means for identifying a problematic device comprising means for analysing data in the uplink from a subset of the said devices; means for identifying all devices within the subset as potentially problematic if said data differs from the expected values; and means for further analysing data in the uplink from other subsets of said devices as the potentially problematic devices join those different subsets.

Brief Description of the Drawings

A method and apparatus for monitoring the performance of devices in telecommunications systems will now be described, by way of example only, with reference to the accompanying drawings in which:

Figure 1 is a representation of part of a mobile telecommunications system;

Figure 2 is a flow diagram showing the steps associated with the method in accordance with the present invention; and.

Figure 3 is a representation of detection apparatus associated with the mobile telecommunications system in accordance with the present invention.

In the drawings, like elements are generally designated with the same reference numeral.

Best Mode for Carrying Out the Invention

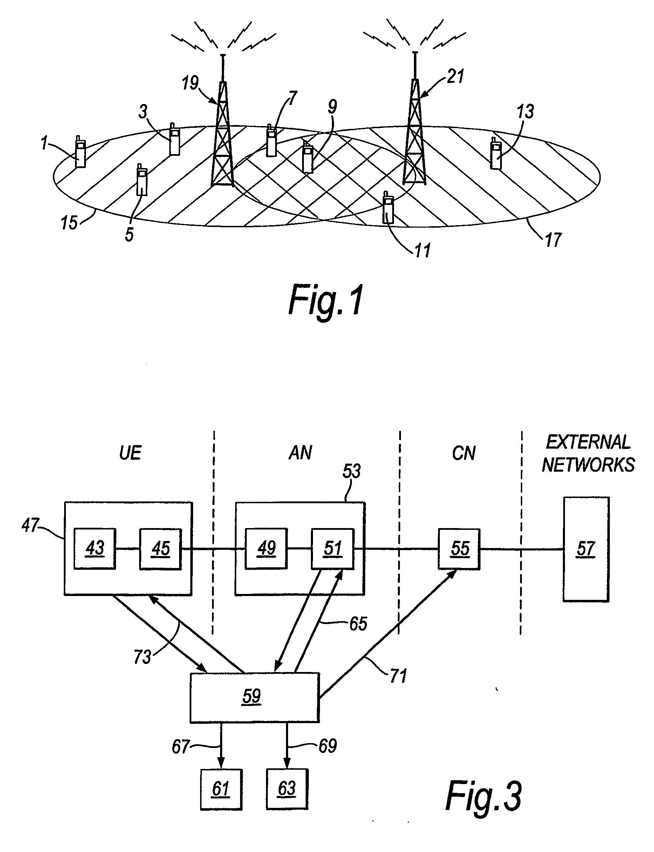

Figure 1 is a simplified representation of a UMTS mobile telecommunications system showing an exemplary distribution of user equipment (UE) 1, 3, 5, 7, 9, 11 and 13 in two cells 15, 17. The cell 15 is served by the Node B 19 and the cell 17 is served by the Node B 21. All UEs within the coverage area of the cell 15 will therefore have an uplink to Node B 19 and all UEs within the coverage area of cell 17 will have an uplink to Node B 21. In use, the UEs 1 to 13 are free to move between cells in the system (of which it will be appreciated there is a number far in excess of the two 15, 17 shown). If the UE 1 moves from a location within the coverage area of the cell 15 to a location within the coverage are of the cell 17, a handover procedure will be performed whereby control of the device passes from the Node B 19 to the Node B 21.

UMTS adopts WCDMA technology as its air interface. This allows all UEs to use the same wideband frequency for transmission of data over the physical channels. The use of orthogonal spreading codes and scrambling codes makes it possible to encode (at the sender) and decode (at the receiver) the signal, avoiding interference from other UEs and allowing the use of variable bit rates depending on the service. However, in order to have a successful decoding, the ratio of the power of the signal to the power of the total wideband interference (Signal-to-Interference Ratio, SIR) must be higher than a certain value. This means that, when a large number of users try to connect at the same time in order to become active users (i.e., the total wideband interference experienced by a single user is increasing), the transmission power of each UE has to increase, causing a further rise in the interference. This phenomenon will eventually lead the UE to the use of its maximum transmission power, making it unable to react against a further extra increase of the noise. The connection in this case will result to be very weak and subject to the risk of drop of packet data units and/or disconnection. The same problem can be encountered at the base station in the downlink communication.

$Pj$ is the received signal power at a Node B from UE$j$ and $I_{total}$ is the total received wideband power including thermal noise power in the Node B (from all the UEs registered with that Node B). $Pj=Lj*I_{total}$ where $Lj$ is the load factor of one connection. The total received interference, excluding the thermal noise $I_{Th}$, can be written as the sum of the received powers from all N users in the same cell:

$$I_{total} - I_{Th} = \sum_{1}^{N} P_j = \sum_{1}^{N} L_j * I_{total}$$

The noise rise is defined as the ratio of the total received wideband power to the thermal noise power, i.e., Noise Rise = $I_{total}/I_{Th}$, and using the above equation this gives:

$$NoiseRise = \frac{I_{total}}{I_{Th}} = \frac{1}{1 - \sum_{1}^{N} L_j} = \frac{1}{1 - \eta UL}$$

Where uplink the load factor $\eta UL$ is defined as:

$$\eta_{UL} = \sum_{1}^{N} L_j$$

It can be seen that when $\eta UL$ approaches 1, the corresponding noise rise approaches infinity. This means that the effect of the interference and the amount of resources requested by the active UEs lead the system to its saturation or, more precisely, to its pole capacity. After this point is reached any further transmission request will either be rejected, or if accepted it will cause an overload of the cell with consequent corruption of communication for the users connected.

Each Node B 19, 21 may perform closed loop power control, whereby the transmission power of each UE 1 to 13 is controlled in order to mitigate near/far effects (that is, the effect of the distance of the UE from the Node B), the effects of obstructions and the like in order to achieve a target SIR values based on a particular block error rate (BLER; that is, the ratio of number of blocks transmitted to the number of blocks containing errors) or bit error rate (BER). The effect of this closed loop power control is generally that the signals transmitted by all UEs 1 to 13 are received in uplink by the Node B's 19, 21 with approximately the same strength. In an optimally functioning system the uplink signal strength is just sufficient to allow reception without any frame errors.

A Node B 19, 21 is able to control the power of the transmitted signals in such a way by sending a transmit power control (TPC) command in downlink to each individual UE 1 to 13 served by that Node B 19, 21. The TPC command value will be controlled by the Node B in dependence upon the estimated SIR value of the uplink from the UE, and in particular on whether the estimated uplink SIR value is greater than or less than the target SIR value. Respective TPC command signals are transmitted to each UE 1 to 13, and each UE 1 to 13 subsequently adjusts the output power of its transmitter in order to maintain the required uplink BLER or BER in response to the TPC command.

For example, the power control will have the effect that a signal from a UE located at the edge of a cell served by a particular Node B, or from a UE located in a building, will be transmitted with an increased transmission power in anticipation of the signal being attenuated before it is received by the Node B - meaning that the signal received by the Node B is of approximately equal strength as signals received by the Node B from other active UEs within the cell.

If the UE operates optimally and transmits using an appropriate power, the capacity of the cell is maximised. To obtain maximum capacity from each cell (and hence the network as a whole) the transmission power of each UE in the cell must be properly controlled as described above. It would be possible for a particular UE to provide a very high quality of service for its user by always transmitting at a very high power. However, this would reduce the number of other UEs that could be active with the Node B of that cell and would also be detrimental to the quality of service that could be obtained by the UEs that were registered with that Node B. Any correctly functioning UE should, for a particular set of circumstances (at a particular location with respect to the Node B and in particular atmospheric conditions), provide an approximately equal BLER or BER performance for a particular transmission power. A UE that requires a significantly higher transmission power than the other devices does not provide an acceptable performance and its use of the network will be detrimental to other users of the network. In one aspect the present invention provides a means for detecting such an underperforming device.

The concept of the noise rise of a particular cell is discussed above. It is, however, not possible to measure the noise rise of the signal transmitted by an individual UE, and so the presence of a problematic UE within the system based on its noise rise may go undetected. The continued operation of a problematic UE within the system is undesirable as the user may consequently experience sub-standard performance of the UE and, as dismissed above and possibly of a greater significance, the system may be adversely affected in such a way that the services a network operator is able to offer to its customers may be compromised.

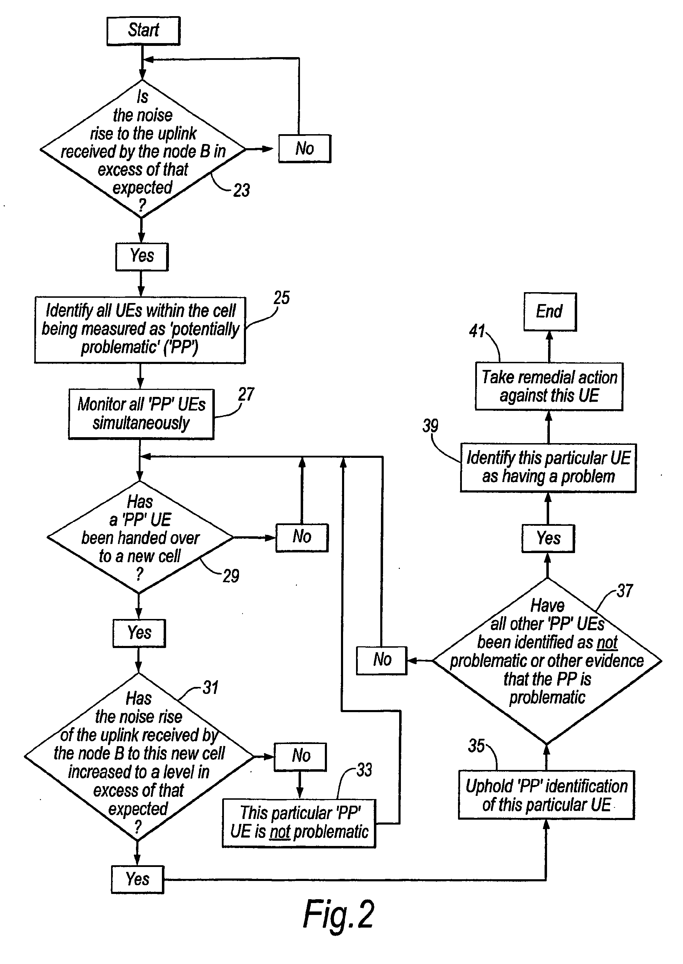

One method by means of which a problematic UE within the telecommunications system may be identified, in accordance with an aspect of the present invention, is outlined in the flow diagram of Figure 2. As described above, an increase in the noise rise of the signal received by a Node B serving a particular cell from a particular UE, to a level in excess of that which would be expected as a result of closed loop power control, is indicative of a problem with that particular UE. The noise rise (indicative of the cumulative signal strength of all signals received in uplink by a particular Node B) relating to a respective cell may be measured by a detection apparatus associated with the telecommunications system (to be described in detail below with reference to Figure 3). For any given number of UEs within a cell, the expected noise rise of the signals received in uplink by the Node B will be known (for example, from records of past measurements or modelling). As the detection apparatus measures the noise rise of the uplink, it may detect a noise rise in excess of that which would be expected for the given number of UEs within the cell (step 23 of Figure 2). Such an excess noise rise is indicative of the presence of one or more problematic UE(s) within the cell, and in this case the apparatus will identify all UEs within that cell as potentially problematic ("PP", step 25).

Although Figure 1 shows a telecommunications system comprising two cells 15, 17 only, typically the detection apparatus will be in communication with the Node B of each cell (of which there will be many) within the telecommunications system. The detection apparatus also measures the uplink noise rise relating to each other cell in the manner described above. The telecommunications system maintains a record of the identity of the UEs registered with each UE. The detection apparatus tracks the movement through the cells of UEs identified as potentially problematic (step 27). As each potentially problematic UE changes location, control of that UE will be handed over from a first cell to a second cell. The detection apparatus detects when such a handover has taken place (step 29), and by analysing noise rise measurements taken in respect of the second cell at the time when handover occurred (step 31) will be able to determine whether the UE under investigation is not problematic (i.e. no unexpected increase in the noise rise of the uplink received by the Node B for the number of UEs registered therewith of the second cell is detected) or is still potentially problematic (i.e. an unexpected noise rise in the uplink received by the Node B for the number of UEs registered therewith of the second cell is detected). The apparatus either identifies the potentially problematic UE as not problematic (step 33) or upholds the potentially problematic identification (step 35) accordingly. If the identification of the UE has been upheld as potentially problematic, the detection apparatus determines whether all other potentially problematic UEs (if any) have been identified as not problematic (step 37) or a check is made for some other evidence that the UE is problematic - for example if the noise rise has unexpectedly increased each time when the UE has handed-over to a new cell tree times. If the other potentially problematic UEs are identified as problematic or if there is no such other evidence of the UE being problematic, the detection apparatus reverts to detecting whether handover has occurred for a potentially problematic UE (step 29).

Using this method, through a plurality of iterations of the appropriate steps shown in Figure 2, the detection apparatus will eliminate some UEs initially identified as potentially problematic as not in fact being problematic as they move from cell to cell. The non-eliminated UE(s) remain as being considered problematic (step 39). Once the apparatus has identified the problematic UE(s) using the method described above, it is able to instigate appropriate remedial action (step 41) - details of which are described below.

Rather than measuring the noise rise, the total power or other characteristic of the received uplink signal from the active UEs may be measured and used to identify potentially problematic UEs. Multiple User Detection (MUD) techniques may be used.

An further alternative way to identify the presence of a problematic UE within the telecommunications system is through measurement of the BLER of each individual UE. As described above with reference to Figure 1, in a system dictated by closed loop power control, each UE transmitter is able to adjust its output power in order to maintain the required BLER. A problematic UE may, however, be unable to maintain the required BLER and the apparatus will be able to detect a UE transmitting in a way such that the required BLER is not being maintained. The apparatus thus identifies the UE not maintaining the required BLER as a problematic UE and instigates appropriate remedial action. For example, the detection apparatus may make a special modification to the TPC command sent in the downlink to the relevant UE, indicating that the UE should transmit at a selected BLER in order to cause the closed loop power control mechanism of the UE to adjust the BLER of the uplink signal. For example, if the BLER in the uplink is below the expected value (for a correctly operating UE), then the BLER-indicative value transmitted in the downlink may be varied to increase its value above that which is actually required. This will cause the closed loop power control mechanism of the UE to increase the BLER of the uplink. The BLER of the uplink will not be in accordance with the BLER-indicative value transmitted in the downlink (because the UE is not operating correctly) but will be increased to a desired value if the BLER-indicative value transmitted in the downlink is calculated with the correct delta from the BLER-indicative value that would be transmitted to a properly functioning UE.

Apparatus suitable for implementing the above-described methods in a mobile telecommunications network is shown diagrammatically in Figure 3. This Figure comprises a simplified representation of the known elements of a UMTS mobile telecommunications network: USIM 43 and mobile equipment 45, which together comprise the UE 47; Node B 49 and radio network controller (RNC) 51, which together comprise the radio network subsystem (RNS) 53 (of course, in a real implementation there will exist a plurality of Node B's controlled by a single RNC); core network (CN) 55; and various external networks (identified generally by the designation 57). The external network 57 could be, for example, an integrated services digital network (ISDN), a public switched telephone network (PSTN), a packet switched public data network (PSPDN), a circuit switched public data network (CSPDN), or a public data network (PDN) such as an intranet, extranet or the Internet. The UE 47 and RNC 51 are both in communication with the detection apparatus 59, thereby allowing the detection apparatus 59 to function as described above. Communication between the UE 47 and the detection apparatus 59 allows the detection apparatus 59 to measure the BLER of each individual UE 47, and communication between the RNC 51 and the apparatus 59 allows the apparatus 59 to measure the noise rise of the uplink received by the Node B 49.

When the detection apparatus 59 has identified a problematic UE, the apparatus 59 is able to take remedial action against the problematic UE in order to restore the intended level of performance experienced by the user of the problematic UE and/or to maintain the performance of the telecommunications system so as not to compromise the services that the network operator is able to offer to its customers. By way of example, a non-exhaustive list of possible remedial actions which the apparatus may take against a problematic UE is given below:

■ the detection apparatus 59 could communicate with RNC 51 (this communication being shown in Figure 3 as 65) in order to invoke a change in the parameters of the problematic UE;
■ the detection apparatus 59 could communicate 65 with RNC 51 in order to invoke a change in the generic parameters of all UEs of particular type;
■ the detection apparatus 59 could communicate 65 with RNC 51 in order to invoke a change in the generic parameters for all UEs present in the cell in which the problem was initially identified, at the time at which the problem was identified by the detection apparatus 59;
■ the detection apparatus 59 could communicate 71 with the CN55 in order to change the parameters of elements of the network;
■ the detection apparatus 59 could communicate 67 with the customer services centre 61 associated with the network operator, thereby allowing an operator to contact the user of the problematic UE in order to notify them of the problem;
■ the detection apparatus 59 could communicate 69 with the operational department(s) 63 of the network operator, in order for the operational department(s) to develop their optimisation and monitoring opportunities within the network;

■ the detection apparatus 59 could communicate 71 with the CN 55 in order to bar the availability of a particular service or services to the problematic UE;

■ the detection apparatus 59 could communicate 71 with the CN 55 in order to bar the availability of a particular service or services for a subscription associated with the problematic UE;

■ the detection apparatus 59 could communicate 71 with the CN 55 in order to bar the availability of a particular service or services to all UEs related to the problematic UE;

■ the detection apparatus 59 could communicate 71 with the CN 55 in order to bar the availability of a particular service or services to all UEs in the network;

■ the detection apparatus 59 could generate a report notifying the user of the problem, and communicate 73 directly with the problematic UE in order to deliver this report to the user;

■ the detection apparatus 59 could communicate 73 directly with the problematic UE in order to restrict the parameter values for the problematic UE;

■ the detection apparatus 59 could communicate 73 directly with specific UEs in the network in order to restrict the parameter values for all UEs related to the problematic UE; and

■ the detection apparatus 59 could communicate 73 directly with all UEs in the network in order to restrict the parameter values for all UEs in the network.

The above actions are given by way of example only, and are not intended to limit the scope of the invention.

The detection system may monitor UEs and/or cells continuously, or it may be triggered into action when the measured noise rise or BLER exceeds or falls below a predetermined threshold (a low BLER implies a good quality connection so more likely to be of a higher power).

Further, in the embodiments described in detail above, the invention is applied to a third generation (UMTS) mobile telecommunications system. It should be understood, however, that the invention could equally be applied to any system wherein a plurality of devices are interconnected via a hub, such as a GSM mobile telecommunications system or a wireless LAN.

## Claims

1. A method of monitoring the performance of mobile devices (1,3,5,7,9,11,13) in a mobile telecommunications system, the method including:

   analysing data in an uplink from the mobile devices (1,3,5,7,9,11,13) to the telecommunications system;
   comparing this data to an expected value so as to tend to identify any of said mobile devices (1,3,5,7,9,11,13) as not performing as expected and therefore as being a problematic device, **characterized in that** the identifying of a problematic device comprising the steps of:
   analysing (23) data in the uplink from a subset of the said mobile devices;
   identifying (25) all mobile devices within the subset as potentially problematic if said data differs from the expected values; and
   further analysing (31) data in the uplink from other subsets of said mobile devices as the potentially problematic devices join (29) those different subsets.

2. The method of claim 1 further including:

   tracking movement (27) of the identified mobile devices in order to identify when one of the identified mobile devices joins (29) a different subset; and
   analysing further data in the uplink from the different subset at the time the one identified mobile device joined by comparing the data from the different subset with an expected value; and
   where the further data differs from the expected value, upholding (35) the one identified mobile device as potentially problematic.

3. The method of claim 2 wherein, when the further data does not differ from the expected value, eliminating (33) the one identified mobile device from being considered potentially problematic.

4. The method according to any one preceding claim, in which each of said subsets comprise the devices registered with a respective base transceiver station serving a particular cell of the telecommunications system.

5. The method according to any one preceding claim, in which analysing the data includes obtaining a measurement indicative of cumulative uplink signal strength of all mobile devices in the subset and comparing the measurement with an expected value.

6. A method according to any one preceding claim, in which analysing the data includes obtaining a noise rise measurement of the uplink received by a transceiver associated with each subset.

7. The method according to any one of claims 1 to 4 in which analysing the data includes measuring the total power in the uplink from active devices in the subset and comparing the measured total power with an expected value.

8. The method according to claim 4, wherein the step of one of the identified mobile devices joining a different subset comprises the one identified mobile device handing over to a different cell.

9. The method of claim 2 or 3 wherein once the identified mobile device is upheld as potentially problematic, or eliminated as being considered potentially problematic, continuing to analyse (37) data for any remaining potentially problematic devices.

10. The method according to any one preceding claim further comprising, where a mobile device is identified as being potentially problematic, instigating (41) appropriate remedial action in order to tend to maintain a required level of performance of the telecommunications system.

11. The method according to claim 10, wherein instigating appropriate remedial action includes at least one of:

    a) controlling the use of the problematic device within the telecommunications system;
    b) excluding the problematic device from service by the telecommunications network;
    c) signalling in the downlink from the telecommunications network to the problematic device, in order to modify its operation within the telecommunications network;
    d) communicating with a customer service centre associated with the network operator in respect of the problematic device;
    e) communicating with an operational department or departments of the network operator in respect of the problematic device;
    f) instigating remedial action in the core network of the system in respect of the problematic device;
    g) instigate remedial action by a radio network controller of the telecommunications system in respect of the problematic device;
    h) instigate remedial action by the problematic device itself.

12. Apparatus for monitoring the performance of mobile devices (1,3,5,7,9,11,13) in a mobile telecommunications system, the apparatus including means for analysing data in an uplink from the mobile devices to the mobile telecommunications system and comparing this data to expected values so as to tend to identify any of said devices as not performing as expected and therefore as being a problematic device, **characterized in that** the apparatus further includes means for identifying a problematic device comprising:

    means for analysing data in the uplink from a subset of the said devices;
    means for identifying all devices within the subset as potentially problematic if said data differs from the expected values; and
    means for further analysing data in the uplink from other subsets of said devices as the potentially problematic devices join those different subsets.

13. The apparatus of claim 12 wherein the means for identifying a problematic device is further configured to:

    track movement of the identified mobile devices in order to identify when one of the identified mobile devices joins a different subset;
    analyse further data in the uplink from the different subset at the time the one identified mobile device joins, by comparing the data from the different subset with an expected value; and
    where the further data differs from the expected value, upholding the one identified mobile device as potentially problematic.

14. The apparatus of claim 13 wherein the analysing means is further configured to eliminate the one identified mobile device from being considered potentially problematic, when the further data does not differ from the expected value.

**15.** The apparatus according to any one of claims 12 to 14, in which each of said subsets comprise the devices registered with a respective base transceiver station serving a particular cell of the telecommunications system.

**16.** The apparatus according to any one of claims 12 to 15, wherein the analysing means is further configured to obtain a measurement indicative of cumulative uplink signal strength of all mobile devices in the subset and comparing the measurement with an expected value.

**17.** The apparatus according to any one of claims 12 to 16, wherein the analysing means is further configured to obtain a noise rise measurement of the uplink received by a transceiver associated with each subset.

**18.** The apparatus according to any one of claims 12 to 15 wherein the analysing means is further configured to measure the total power in the uplink from active devices in the subset and comparing the measured total power with an expected value.

**19.** The apparatus of claim 13 or 14 further configured to continue analysing data for any remaining potentially problematic devices, once the identified mobile device is upheld as potentially problematic, or eliminated as being considered potentially problematic.

**20.** The apparatus according to any one of claims 12 to 19, wherein, where a mobile device is identified as being potentially problematic, the means for identifying is further configured to instigate appropriate remedial action in order to tend to maintain a required level of performance of the telecommunications system.

**21.** The apparatus according to claim 20 wherein the means for identifying is further configured to perform at least one of the following steps in order to instigate appropriate remedial action:

a) control the use of the problematic device within the telecommunications system;
b) exclude the problematic device from service by the telecommunications network;
c) signal in the downlink from the telecommunications network to the problematic device, in order to modify its operation within the telecommunications network;
d) communicate with a customer service centre associated with the network operator in respect of the problematic device;
e) communicate with an operational department or departments of the network operator in respect of the problematic device;
f) instigate remedial action in the core network of the system in respect of the problematic device.;
g) instigate remedial action by a radio network controller of the telecommunications system in respect of the problematic device;
h) instigate remedial action by the problematic device itself.

**22.** The apparatus according to any one of claims 12 to 21, in which the mobile telecommunications system is a UMTS mobile telecommunications system.

**23.** The apparatus according to any one of claims 12 to 21, in which the mobile telecommunications system is a GSM mobile telecommunications system.

**24.** The apparatus according to any one of claims 12 to 21, in which the mobile telecommunications system is a wireless local area network.

**Patentansprüche**

**1.** Verfahren zum Überwachen der Leistung von Mobilgeräten (1, 3, 5, 7, 9, 11, 13) in einem Mobiltelekommunikationssystem, wobei das Verfahren die folgenden Schritte beinhaltet:

Analysieren von Daten in einem Uplink von den Mobilgeräten (1, 3, 5, 7, 9, 11, 13) zum Telekommunikationssystem;
Vergleichen dieser Daten mit einem erwarteten Wert, um eventuell eines der genannten Mobilgeräte (1, 3, 5, 7, 9, 11, 13) im Hinblick auf eine nicht erwartungsgemäße Leistung und somit als problematisches Gerät zu identifizieren, **dadurch gekennzeichnet, dass** das Identifizieren eines problematischen Gerätes die folgenden Schritte beinhaltet:

Analysieren (23) von Daten im Uplink von einer Teilmenge der genannten Mobilgeräte;

Identifizieren (25) aller Mobilgeräte in der Teilmenge als potentiell problematisch, wenn die genannten Daten von den erwarteten Werten abweichen; und

Weiteranalysieren (31) von Daten im Uplink von anderen Teilmengen der genannten Mobilgeräte, wenn sich die potentiell problematischen Geräte diesen anderen Teilmengen anschließen (29).

2. Verfahren nach Anspruch 1, das ferner die folgenden Schritte beinhaltet:

Verfolgen der Bewegung (27) der identifizierten Mobilgeräte, um zu identifizieren, wenn sich eines der identifizierten Mobilgeräte einer anderen Teilmenge anschließt (29); und

Analysieren weiterer Daten im Uplink von der anderen Teilmenge zu dem Zeitpunkt, an dem sich das eine identifizierte Mobilgerät angeschlossen hat, durch Vergleichen der Daten von der anderen Teilmenge mit einem erwarteten Wert; und

wenn die weiteren Daten von dem erwarteten Wert abweichen, Beibehalten (35) der Bewertung des einen identifizierten Mobilgerätes als potentiell problematisch.

3. Verfahren nach Anspruch 2, wobei dann, wenn die weiteren Daten nicht von dem erwarteten Wert abweichen, der Status des einen identifizierten Mobilgerätes als potentiell problematisch aufgehoben (33) wird.

4. Verfahren nach einem der vorherigen Ansprüche, wobei jede der genannten Teilmengen die Geräte umfasst, die bei einer jeweiligen Basis-Transceiver-Station registriert sind, die eine bestimmte Zelle des Telekommunikationssystems versorgt.

5. Verfahren nach einem der vorherigen Ansprüche, bei dem das Analysieren der Daten das Gewinnen eines Messwertes, der eine kumulative Uplink-Signalstärke aller Mobilgeräte in der Teilmenge anzeigt, und das Vergleichen des Messwertes mit einem erwarteten Wert beinhaltet.

6. Verfahren nach einem der vorherigen Ansprüche, wobei das Analysieren der Daten das Gewinnen eines Rauschanstiegsmesswertes des Uplinks beinhaltet, der von einem Transceiver in Verbindung mit jeder Teilmenge empfangen wird.

7. Verfahren nach einem der Ansprüche 1 bis 4, bei dem das Analysieren der Daten das Messen der Gesamtleistung im Uplink von aktiven Geräten in der Teilmenge und das Vergleichen der gemessenen Gesamtleistung mit einem erwarteten Wert beinhaltet.

8. Verfahren nach Anspruch 4, wobei der Schritt, bei dem sich eines der identifizierten Mobilgeräte einer anderen Teilmenge anschließt, beinhaltet, dass das eine identifizierte Mobilgerät an eine andere Zelle übergibt.

9. Verfahren nach Anspruch 2 oder 3, wobei dann, wenn der Status des identifizierten Mobilgerätes als potentiell problematisch beibehalten oder aufgehoben wird, die Analyse (37) von Daten im Hinblick auf eventuelle verbleibende potentiell problematische Geräte fortgesetzt wird.

10. Verfahren nach einem der vorherigen Ansprüche, das, wenn ein Mobilgerät als potentiell problematisch identifiziert wird, ferner das Veranlassen (41) einer geeigneten Abhilfemaßnahme mit dem Ziel beinhaltet, ein benötigtes Leistungsniveau des Telekommunikationssystems aufrechtzuerhalten.

11. Verfahren nach Anspruch 10, wobei das Veranlassen einer geeigneten Abhilfemaßnahme wenigstens einen der folgenden Schritte beinhaltet:

a) Kontrollieren der Nutzung des problematischen Gerätes innerhalb des Telekommunikationssystems;
b) Ausschließen des problematischen Gerätes aus der Versorgung durch das Telekommunikationsnetzwerk;
c) Signalisieren im Downlink von dem Telekommunikationsnetz zum problematischen Gerät, dass sein Betrieb innerhalb des Telekommunikationsnetzes modifiziert wird;
d) Kommunizieren mit einer Kundendienstzentrale in Verbindung mit dem Netzwerkbetreiber in Bezug auf das problematische Gerät;

e) Kommunizieren mit einer oder mehreren Betriebsabteilungen des Netzbetreibers in Bezug auf das problematische Gerät;

f) Veranlassen einer Abhilfemaßnahme im Kernnetz des Systems in Bezug auf das problematische Gerät;

g) Veranlassen einer Abhilfemaßnahme durch eine Funknetzsteuerung des Telekommunikationssystems in Bezug auf das problematische Gerät;

h) Veranlassen einer Abhilfemaßnahme durch das problematische Gerät selbst.

12. Vorrichtung zum Überwachen der Leistung von Mobilgeräten (1, 3, 5, 7, 9, 11, 13) in einem Mobiltelekommunikationssystem, wobei die Vorrichtung Mittel zum Analysieren von Daten in einem Uplink von den Mobilgeräten zum Mobiltelekommunikationssystem und zum Vergleichen dieser Daten mit erwarteten Werten mit dem Ziel beinhaltet, eventuell eines der genannten Geräte mit einer nicht erwartungsgemäßen Leistung und somit als problematisches Gerät zu identifizieren, **dadurch gekennzeichnet, dass** die Vorrichtung ferner Mittel zum Identifizieren eines problematischen Gerätes beinhaltet, die Folgendes umfassen:

Mittel zum Analysieren von Daten im Uplink von einer Teilmenge der genannten Geräte;

Mittel zum Identifizieren aller Geräte in der Teilmenge als potentiell problematisch, wenn die genannten Daten von den erwarteten Werten abweichen; und

Mittel zum weiteren Analysieren von Daten im Uplink von anderen Teilmengen der genannten Geräte, wenn sich die potentiell problematischen Geräte diesen anderen Teilmengen anschließen.

13. Vorrichtung nach Anspruch 12, wobei das Mittel zum Identifizieren eines problematischen Gerätes ferner konfiguriert ist zum:

Verfolgen einer Bewegung der identifizierten Mobilgeräte, um zu identifizieren, wenn sich eines der identifizierten Mobilgeräte einer anderen Teilmenge anschließt;

Analysieren weiterer Daten im Uplink von der anderen Teilmenge zu dem Zeitpunkt, an dem sich das eine identifizierte Mobilgerät anschließt, durch Vergleichen der Daten von der anderen Teilmenge mit einem erwarteten Wert; und

wo die weiteren Daten von dem erwarteten Wert abweichen, Beibehalten des Status des einen identifizierten Mobilgerätes als potentiell problematisch.

14. Vorrichtung nach Anspruch 13, wobei das Analysemittel ferner so konfiguriert ist, dass es den Status des einen identifizierten Mobilgerätes als potentiell problematisch aufhebt, wenn die weiteren Daten nicht von dem erwarteten Wert abweichen.

15. Vorrichtung nach einem der Ansprüche 12 bis 14, wobei jede der genannten Teilmengen die Geräte umfasst, die bei einer jeweiligen Basis-Transceiver-Station registriert sind, die eine bestimmte Zelle des Telekommunikationssystems versorgt.

16. Vorrichtung nach einem der Ansprüche 12 bis 15, wobei das Analysemittel ferner so konfiguriert ist, dass es einen Messwert gewinnt, der eine kumulative Uplink-Signalstärke aller Mobilgeräte in der Teilmenge anzeigt, und den Messwert mit einem erwarteten Wert vergleicht.

17. Vorrichtung nach einem der Ansprüche 12 bis 16, wobei das Analysemittel ferner so konfiguriert ist, dass es einen Rauschanstiegsmesswert des Uplinks gewinnt, der von einem Transceiver in Verbindung mit jeder Teilmenge empfangen wird.

18. Vorrichtung nach einem der Ansprüche 12 bis 15, wobei das Analysemittel ferner zum Messen der Gesamtleistung im Uplink von aktiven Geräten in der Teilmenge und zum Vergleichen der gemessenen Gesamtleistung mit einem erwarteten Wert konfiguriert ist.

19. Vorrichtung nach Anspruch 13 oder 14, die ferner so konfiguriert ist, dass sie das Analysieren von Daten für eventuelle verbleibende potentiell problematische Geräte fortsetzt, wenn der Status des identifizierten Mobilgerätes als potentiell problematisch beibehalten oder aufgehoben wird.

20. Vorrichtung nach einem der Ansprüche 12 bis 19, wobei dann, wenn ein Mobilgerät als potentiell problematisch identifiziert ist, das Mittel zum Identifizieren ferner so konfiguriert wird, dass es eine geeignete Abhilfemaßnahme mit dem Ziel, ein benötigtes Leistungsniveau des Telekommunikationssystems aufrechtzuerhalten, veranlasst.

**21.** Vorrichtung nach Anspruch 20, wobei das Mittel zum Identifizieren ferner zum Ausführen von wenigstens einem der nachfolgenden Schritte konfiguriert ist, um geeignete Abhilfemaßnahmen zu veranlassen:

a) Kontrollieren der Nutzung des problematischen Gerätes innerhalb des Telekommunikationssystems;
b) Ausschließen des problematischen Gerätes von der Versorgung durch das Telekommunikationsnetzwerk;
c) Signalisieren im Downlink vom Telekommunikationsnetz zu dem problematischen Gerät, um seinen Betrieb innerhalb des Telekommunikationsnetzes zu modifizieren;
d) Kommunizieren mit einer Kundendienstzentrale in Verbindung mit dem Netzwerkbetreiber in Bezug auf das problematische Gerät;
e) Kommunizieren mit einer oder mehreren Betriebsabteilungen des Netzwerkbetreibers in Bezug auf das problematische Gerät;
f) Veranlassen einer Abhilfemaßnahme im Kernnetz des Systems in Bezug auf das problematische Gerät;
g) Veranlassen einer Abhilfemaßnahme durch eine Funknetzsteuerung des Telekommunikationssystems in Bezug auf das problematische Gerät;
h) Veranlassen einer Abhilfemaßnahme durch das problematische Gerät selbst.

**22.** Vorrichtung nach einem der Ansprüche 12 bis 21, bei der das Mobiltelekommunikationssystem ein UMTS-Mobiltelekommunikationssystem ist.

**23.** Vorrichtung nach einem der Ansprüche 12 bis 21, bei der das Mobiltelekommunikationssystem ein GSM-Mobiltelekommunikationssystem ist.

**24.** Vorrichtung nach einem der Ansprüche 12 bis 21, bei der das Mobiltelekommunikationssystem ein drahtloses lokales Netzwerk ist.

**Revendications**

**1.** Procédé de surveillance des performances de dispositifs mobiles (1, 3, 5, 7, 9, 11, 13) dans un système mobile de télécommunications, le procédé comprenant :

l'analyse des données dans une liaison ascendante depuis les dispositifs mobiles (1, 3, 5, 7, 9, 11, 13) vers le système de télécommunications ;
la comparaison de ces données à une valeur escomptée pour qu'elles soient susceptibles d'identifier l'un quelconque desdits dispositifs mobiles (1, 3, 5, 7, 9, 11, 13) comme étant un dispositif dont les performances ne répondent pas aux niveaux escomptés, et par conséquent comme étant un dispositif problématique, **caractérisé en ce que** l'identification d'un dispositif problématique comprend les étapes consistant à :
analyser (23) des données dans la liaison ascendante provenant d'un sous-ensemble desdits dispositifs mobiles ;
identifier (25) tous les dispositifs mobiles au sein du sous-ensemble comme étant potentiellement problématiques si lesdites données diffèrent des valeurs escomptées ; et
analyser (31) en outre des données dans la liaison ascendante provenant d'autres sous-ensembles desdits dispositifs mobiles, au fur et à mesure que les dispositifs potentiellement problématiques viennent s'ajouter (29) à ces différents sous-ensembles.

**2.** Procédé selon la revendication 1, comprenant en outre :

le suivi du déplacement (27) des dispositifs mobiles identifiés afin de définir l'instant auquel l'un des dispositifs mobiles identifiés vient s'ajouter (29) à un sous-ensemble différent ; et
l'analyse de données supplémentaires dans la liaison ascendante provenant du sous-ensemble différent, au moment où ledit dispositif mobile identifié est venu s'ajouter, grâce à une comparaison entre les données provenant du sous-ensemble différent et une valeur escomptée ; et
la confirmation (35) dudit dispositif mobile identifié comme étant potentiellement problématique, dans le cas où les données supplémentaires diffèrent de la valeur escomptée.

**3.** Procédé selon la revendication 2, cas dans lequel, lorsque les données supplémentaires ne diffèrent pas de la valeur escomptée, ledit dispositif mobile identifié est écarté (33) pour qu'il ne soit plus considéré comme étant potentiellement problématique.

**4.** Procédé selon l'une quelconque des revendications précédentes, chacun desdits sous-ensembles comprenant les dispositifs qui sont enregistrés auprès d'une station de base émettrice/réceptrice respective laquelle dessert une cellule spécifique du système de télécommunications.

**5.** Procédé selon l'une quelconque des revendications précédentes, l'analyse des données comprenant l'obtention d'une mesure qui indique l'intensité cumulative du signal de la liaison ascendante de tous les dispositifs mobiles présents dans le sous-ensemble, ainsi que la comparaison de la mesure par rapport à une valeur escomptée.

**6.** Procédé selon l'une quelconque des revendications précédentes, l'analyse des données comprenant l'obtention d'une mesure de l'augmentation du bruit de la liaison ascendante qui est reçue par un émetteur/récepteur associé à chaque sous-ensemble.

**7.** Procédé selon l'une quelconque des revendications 1 à 4, l'analyse des données comprenant la mesure de la puissance totale présente dans la liaison ascendante provenant des dispositifs actifs du sous-ensemble, ainsi que la comparaison de la puissance totale mesurée par rapport à une valeur escomptée.

**8.** Procédé selon la revendication 4, l'étape au cours de laquelle l'un des dispositifs mobiles identifiés est en train de rejoindre un sous-ensemble différent comprenant ledit dispositif mobile identifié qui effectue un transfert vers une cellule différente.

**9.** Procédé selon la revendication 2 ou 3, cas dans lequel une fois que le dispositif mobile identifié a été confirmé comme étant potentiellement problématique, ou a été écarté en tant que dispositif considéré comme étant potentiellement problématique, l'analyse (37) des données se poursuit afin de déceler des dispositifs potentiellement problématiques parmi les dispositifs restants.

**10.** Procédé selon l'une quelconque des revendications précédentes, comprenant en outre, lorsqu'un dispositif mobile a été identifié comme étant potentiellement problématique, le lancement (41) de mesures correctives appropriées pour que celles-ci soient susceptibles de maintenir le système de télécommunications à un niveau de performance requis.

**11.** Procédé selon la revendication 10, le lancement de mesures correctives appropriées comprenant au moins l'un des éléments suivants :

a) le contrôle de l'utilisation du dispositif problématique au sein du système de télécommunications ;
b) l'opération consistant à exclure le dispositif problématique du service assuré par le réseau de télécommunications ;
c) la signalisation dans la liaison descendante partant du réseau de télécommunications vers le dispositif problématique, dans le but de modifier son fonctionnement au sein du réseau de télécommunications ;
d) la communication avec un centre de service Clients, associé à l'exploitant du réseau, au sujet du dispositif problématique ;
e) la communication avec une Division opérationnelle ou avec des Divisions opérationnelles de l'exploitant du réseau au sujet du dispositif problématique ;
f) le lancement de mesures correctives dans le réseau de base du système en ce qui concerne le dispositif problématique ;
g) le lancement de mesures correctives par un contrôleur du réseau radio du système de télécommunications en ce qui concerne le dispositif problématique ;
h) le lancement de mesures correctives par le dispositif problématique proprement dit.

**12.** Appareil pour surveiller les performances de dispositifs mobiles (1, 3, 5, 7, 9, 11, 13) dans un système mobile de télécommunications, l'appareil comprenant des moyens pour analyser des données dans une liaison ascendante depuis les dispositifs mobiles vers le système mobile de télécommunications et pour comparer ces données à des valeurs escomptées pour qu'elles soient susceptibles d'identifier l'un quelconque desdits dispositifs comme étant un dispositif dont les performances ne répondent pas aux niveaux escomptés, et par conséquent comme étant un dispositif problématique, **caractérisé en ce que** l'appareil inclut en outre des moyens pour identifier un dispositif problématique comprenant :

des moyens pour analyser des données dans la liaison ascendante provenant d'un sous-ensemble desdits dispositifs ;

des moyens pour identifier tous les dispositifs au sein du sous-ensemble comme étant potentiellement problématiques si lesdites données diffèrent des valeurs escomptées ; et

des moyens pour analyser en outre des données dans la liaison ascendante provenant d'autres sous-ensembles desdits dispositifs, au fur et à mesure que les dispositifs potentiellement problématiques viennent s'ajouter à ces différents sous-ensembles.

**13.** Appareil selon la revendication 12, les moyens pour identifier un dispositif problématique étant en outre configurés pour :

suivre le déplacement des dispositifs mobiles identifiés afin de définir l'instant auquel l'un des dispositifs mobiles identifiés vient s'ajouter à un sous-ensemble différent ;

analyser des données supplémentaires dans la liaison ascendante provenant du sous-ensemble différent, au moment où ledit dispositif mobile identifié est venu s'ajouter, grâce à une comparaison entre les données provenant du sous-ensemble différent et une valeur escomptée ; et

confirmer ledit dispositif mobile identifié comme étant potentiellement problématique, dans le cas où les données supplémentaires diffèrent de la valeur escomptée.

**14.** Appareil selon la revendication 13, les moyens d'analyse étant configurés en outre pour écarter ledit dispositif mobile identifié pour qu'il ne soit plus considéré comme étant potentiellement problématique, lorsque les données supplémentaires ne diffèrent pas de la valeur escomptée.

**15.** Appareil selon l'une quelconque des revendications 12 à 14, chacun desdits sous-ensembles comprenant les dispositifs qui sont enregistrés auprès d'une station de base émettrice/réceptrice respective laquelle dessert une cellule spécifique du système de télécommunications.

**16.** Appareil selon l'une quelconque des revendications 12 à 15, les moyens d'analyse étant configurés en outre pour obtenir une mesure qui indique l'intensité cumulative du signal de la liaison ascendante de tous les dispositifs mobiles présents dans le sous-ensemble, et pour comparer la mesure par rapport à une valeur escomptée.

**17.** Appareil selon l'une quelconque des revendications 12 à 16, les moyens d'analyse étant configurés en outre pour obtenir une mesure de l'augmentation du bruit de la liaison ascendante qui est reçue par un émetteur/récepteur associé à chaque sous-ensemble.

**18.** Appareil selon l'une quelconque des revendications 12 à 15, les moyens d'analyse étant configurés en outre pour mesurer la puissance totale présente dans la liaison ascendante provenant des dispositifs actifs du sous-ensemble, et pour comparer la puissance totale mesurée par rapport à une valeur escomptée.

**19.** Appareil selon la revendication 13 ou 14, configuré en outre pour poursuivre l'analyse des données afin de déceler des dispositifs potentiellement problématiques parmi les dispositifs restants, une fois que le dispositif mobile identifié a été confirmé comme étant potentiellement problématique, ou a été écarté en tant que dispositif considéré comme étant potentiellement problématique.

**20.** Appareil selon l'une quelconque des revendications 12 à 19, cas dans lequel, lorsqu'un dispositif mobile a été identifié comme étant potentiellement problématique, les moyens servant à l'identification sont configurés en outre pour lancer des mesures correctives appropriées pour que celles-ci soient susceptibles de maintenir le système de télécommunications à un niveau de performance requis.

**21.** Appareil selon la revendication 20, les moyens servant à l'identification sont configurés en outre pour exécuter au moins l'une des étapes suivantes afin de lancer des mesures correctives appropriées, à savoir :

a) contrôler l'utilisation du dispositif problématique au sein du système de télécommunications ;

b) exclure le dispositif problématique du service assuré par le réseau de télécommunications ;

c) signaler dans la liaison descendante partant du réseau de télécommunications vers le dispositif problématique, dans le but de modifier son fonctionnement au sein du réseau de télécommunications ;

d) communiquer avec un centre Service Clients, associé à l'exploitant du réseau, au sujet du dispositif problématique ;

e) communiquer avec une Division opérationnelle ou avec des Divisions opérationnelles de l'exploitant du réseau au sujet du dispositif problématique ;

f) lancer des mesures correctives dans le réseau de base du système en ce qui concerne le dispositif problématique ;

g) lancer des mesures correctives par un contrôleur du réseau radio du système de télécommunications en ce qui concerne le dispositif problématique ;

h) lancer des mesures correctives par le dispositif problématique proprement dit.

22. Appareil selon l'une quelconque des revendications 12 à 21, le système mobile de télécommunications étant un système mobile de télécommunications UMTS.

23. Appareil selon l'une quelconque des revendications 12 à 21, le système mobile de télécommunications étant un système mobile de télécommunications GSM.

24. Appareil selon l'une quelconque des revendications 12 à 21, le système mobile de télécommunications étant un réseau local sans fil.

**Fig.1**

**Fig.3**

Fig.2

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5812636 A
- US 20040038678 A